# EUROPEAN PATENT SPECIFICATION

(11) **EP 0 639 763 B1**
(45) Date of publication and mention of the grant of the patent: **07.10.1998**
(21) Application number: 94850129.1
(22) Date of filing: 14.07.1994
(51) Int. Cl.: G01M 11/00

(54) **Arrangement for identifying an optical fibre**
Anordnung zum Identifizieren eines Lichtwellenleiters
Arrangement d'identification de fibre optique

(30) Priority: 17.08.1993 SE 9302650
(43) Date of publication of application: 22.02.1995
(73) Proprietor: TELIA AB, 123 86 Farsta (SE)
(72) Inventor: Norrgard, Patrik, SE-121 66 Johanneshov (SE); Isheden, Björn, SE-122 53 Enskede (SE)
(74) Representative: Akerman, Marten Lennart

(56) References cited:
- EP-A- 0 390 341
- EP-A- 0 536 002
- PATENT ABSTRACTS OF JAPAN vol. 17, no. 643 (P-1651) 29 November 1993 & JP-A-05 209 809 (NIPPON TELEGR & TELEPH CORP) 20 August 1993
- Optical Fibre Communications Principles and Practice, by John Senior, Prentice-Hall, 1985, pages 219-221

## Description

### Field of the invention

The present invention relates to an arrangement which makes it possible to be able to identify out of a set of optical fibres a certain fibre at an arbitrary location along the length of the fibre.

The arrangement operates free from interference without producing mechanical damage to the fibre by utilizing an effect on the fibre which produces a change in polarization which is detected. The fibre is affected electrically or magnetically or preferably mechanically.

### Prior art

It is already known that an influence on a fibre causes a change in polarization in the transmitted light. Above all, mechanical influencing of a fibre has been used for sensing different quantities.

EP-0,151,015 describes an apparatus by means of which the mechanical stress in an optical fibre during its manufacture can be sensed with the aid of a detected change in polarization.

EP-0,120,999 describes a fibre optical sensor which, with the aid of a detected change in polarization, can sense force and pressure. Besides this, the sensor can also be used in monitoring and protection arrangements, for example line monitoring in tennis courts.

EP-0,291,962 relates to a method for measuring polarization and birefringence in optical single-mode fibres.

JP 59-27232 shows an optical pressure sensor which provides for simple sensing of pressure changes with the aid of an optical fibre.

EP-0,249,923 describes a method and a device for measuring polarization beat length in strongly doubly refracted optical single-mode fibres.

EP-0,190,922 describes a device and a method for determining the orientation of the birefractive axes in an optical fibre.

FR 2,547,049 describes a polarimeter system for remote parameter measuring which uses an analyser for determining the phase shift between channels with fixed and variable polarization.

EP-0,143,583 describes a fibre optical mode coupling device comprising a pressure element.

EP-A-0 390 341, which is considered the most relevant priort art, relates to a method and apparatus for identifying an optical transmission medium in which a light-generating element injects light of known polarization into a first end of a fibre, which light is reflected by the other end of the fibre back towards the fist end, a seeker element is arranged at an arbitrary point along the fibre in order to influence the polarization of the light, and a detecting element is arranged at the first end of the fibre in order to detect a change in polarization which is caused by the seeker element, and thereby verify the identity of the fibre.

EP-A-0 536 002 relates to a method of identifying an optical cable similar to the invention disclosed in EP-A-0 390 341.

The present invention addresses the problem of identifying an optical fibre out of set of fibres forming part of a ribbon fibre cable in accordance with the characterizing portion of claim 1.

### Summary of the invention

The present invention thus provides an arrangement for identifying an optical fibre out of a set of fibres at an arbitrary location along the length of the fibre in an interference-free manner and without mechanical effect on the fibre.

The arrangement according to the invention comprises a light-generating element which injects light of known polarization into a first end of the fibre. The light is reflected by the other end of the fibre back towards the first end. A seeker element is arranged at an arbitrary point along the fibre in order to influence the polarization of the light. A detecting element is arranged at the first end of the fibre in order to detect a change in polarization which is caused by the seeker element and thereby verify the identity of the fibre.

The invention is defined by the subsequent patent claims 1-4.

### Brief description of the drawings

The invention will now be described in detail with reference to the subsequent drawings, in which:
Figure 1 is a simple block diagram of the arrangement according to the invention,
Figure 2 is a view partially in cross section of a first embodiment of the pressure equipment according to the invention,
Figure 3 is a view partially in cross section of a second embodiment of the pressure equipment according to the invention, and
Figure 4 is a diagrammatic view of a test set up for verifying the operation of the invention.

### Detailed description of the embodiments of the invention

The present invention provides a tool for identifying one fibre out of a set of fibres. There is need for such a tool, for example when it is desired to make a branch or similar somewhere along the length of a fibre. The fibres are often collected in large quantity and it is necessary to identify the correct fibre. This should also be carried out without disturbing the communication in the fibres or causing damage to any of the fibres.

Nowadays, single-mode fibres are mainly used. In a single-mode fibre, there is a negligible dispersion due to the birefringent characteristics of the fibre. This is due to the fact that the polarization changes in a random manner for both directions of propagation which gives the same mean dispersion for both directions of propagation in the fundamental mode. The measured polarization mode dispersion is less than 1 ps/km in conventional single-mode fibres. It is known that it is possible to influence the polarization in a fibre in a controlled manner in different ways, for example by bending, twisting and pressure, and by electrical and magnetic fields. All these ways affect the polarization by changing the polarization from linear to elliptical or circular or by rotating the plane of polarization. Such a change can be detected, for example by means of a polarization filter and power meter. This phenomenon is utilized in the present invention.

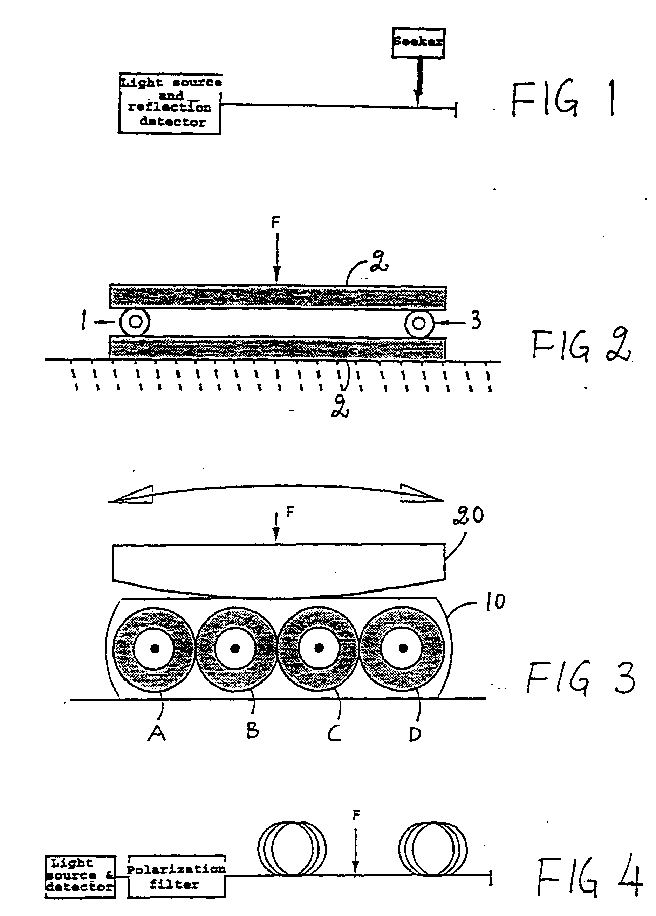

Figure 1 diagrammatically shows the arrangement according to the invention. In one end of the fibre 1 which is to be identified there is a light source and reflection detector. Somewhere along the fibre 1 there is a seeker element which influences the polarization of the light without damaging the fibre. The light source, which is preferably a laser, emits light of known polarization into the fibre and the light is reflected at the other end of the fibre back to the first end. On the way through the fibre, the polarization of the light is affected by the seeker element, in the present case twice, since the light goes forward and back in the fibre. (It is actually possible to have the light source at one end and the reflection detector at the other end but this is not as convenient). The detector unit determines with adequate reliability when the seeker element is influencing the right fibre.

As mentioned above, the fibre can be influenced in different ways in order to change the polarization. The preferred embodiment of the invention uses the photo-elastic effect. If a fibre is exposed to a vertical pressure at right angles to give the direction of propagation, a change in polarization is obtained. The two vector components are displaced in time and added to give the total polarization mode dispersion. Two mechanisms affect the polarization at the pressure points, namely the photoelastic effect itself, that is to say the index of refraction is affected and thereby the polarization, but also the physical deformation of the fibre, where the elliptical shape affects the polarization. The latter influence should be avoided by spreading the pressure over an adequate length of the conductor so that the fibre is not damaged. According to theory, the polarization is periodically changed with increasing pressure. The polarization does not depend on the length over which the pressure is spread on the fibre.

Figure 2 describes a pressure equipment for an individual single-mode fibre. The pressure equipment has the capability of exerting pressure vertically on the fibre in a controlled manner. It comprises two metal devices 2 with fine surfaces which press against the fibre 1. The pressure is distributed along the fibre over a length of 125 mm and is divided between the active measurement fibre 1 and an unconnected auxiliary fibre 3.

Abovementioned embodiments of the pressure equipment can also be used for identifying a ribbon fibre cable. Figure 3 shows, however, a preferred embodiment of the pressure equipment for exerting pressure on a ribbon fibre cable. The ribbon fibre cable 10 consists of an envelope and a number of fibres A, B, C, D. A pressure device 20 presses with a round surface against the ribbon fibre cable 10. The pressure device can thereby swing from side to side at the same time as it presses against the ribbon fibre cable. The pressure against a measurement fibre will be modulated by the device changing position and the angle of incidence of the pressure against the measurement fibre will vary with the position of the round surface. Naturally, the pressure is spread over a certain length of the fibre in order to avoid damage. Naturally, it is sufficient for the ribbon fibre cable to be distinguished from other ribbon fibre cables since the individual fibres within the cable are easily identified from their position in the cable.

Figure 4 shows a test set up for verifying the operation of the invention. The test was carried out on a standard single-mode fibre with primary protection consisting of a 250µm layer of acrylate. The pressure equipment according to Figure 2 was used. Coils of 500 m fibre each were coupled on each side of the pressure point F. The laser light source used a wavelength of 1300 nm. The fibre was exposed to increasing pressure and the reflection from the far end was studied using the detector element. The control pin of the connection contacts for the fibre was removed so that the contacts could be turned in order to be able to study how pressure in different directions affected the polarization. Between each series of measurements, the contacts were turned so that the direction of the applied pressure was changed with respect to the polarization. A distinct periodicity was demonstrated in the measurement series. The magnitude of the period, and maxima and minima positions, were changed with a change in the direction of polarization of the light source. This can be explained by the reflected light having been influenced twice by the applied pressure. The change in polarization can be close to zero if the polarization at the pressure point is polarized only in the X or Y direction.

The theoretical prerequisites for identification by means of polarization detection are in good agreement with the test results. Of fundamental importance in designing a fibre identifier is minimizing the risk of imparting lasting damage to the fibre and minimizing the pressure insensitivity which arises in unfavourable cases. The following requirements can be stipulated:
the fibre should be exposed to sufficient pressure to reach through the protective layers but without damaging the fibre,
the pressure is modulated, for example sinusoidally, and only changes in polarization are detected so that the static polarization mode dispersion of the fibre does not have an effect,
the pressure is spread over a length which is sufficient to ensure that the fibre is not damaged,
the pressure is applied alternately in two different directions with respect to the direction of polarization. Alternatively, the direction of polarization of the light source can be rotated alternately between two directions in order to avoid pressure insensitivity if the polarization at the pressure point is polarized only in the X or y direction.

The detector element should be able to detect changes in polarization which the seeker unit generates but should also contain functions for communication and measuring reflection losses. The communication is needed for informing the seeker end that the right fibre has been identified.

In practice, the invention is applied as follows. The light source and the reflection detector are installed at a point where the fibre in question is identified. The seeker element is taken along to a location where branching or the like is to be carried out, for example in a cable pit. The seeker element is applied in turn to relevant fibres at the same time as the reflections are studied at the first end of the fibre. When the seeker element is placed on other active fibres, the communication is not thereby disturbed. When the seeker element has been placed on the correct fibre, this is detected at the first end, and this fact is communicated through the fibre to the seeker element which contains a function for communication as mentioned above. Identification is thus achieved.

The scope of the invention is only limited by the patent claims below.

## Claims

1. Arrangement for identifying an optical fibre out of a set of fibres at an arbitrary location along the length of the fibre, comprising
a light-generating element which injects light of known polarization into a first end of the fibre, which light is reflected by the other end of the fibre back towards the first end,
a seeker element arranged at an arbitrary point along the fibre in order to influence the polarization of the light by mechanically pressing on the fibre,
a detecting element arranged at the first end of the fibre in order to detect a change in polarization which is caused by the seeker element, and thereby verify the identity of the fibre, **characterized** in that the seeker element comprises a pressure device (20) with a rounded surface which rests against a ribbon fibre cable (10) and has the capability of swinging from side to side at the same time as it presses against the cable (10) so that the pressure against an individual fibre (A, B, C, D) will be modulated by the pressure device (20) changing position.

2. Arrangement according to claim 1, **characterized** in that the seeker element is arranged to modulate the pressure on the fibre sinusoidally.

3. Arrangement according to claim 2, **characterized** in that the light-generating element is arranged to rotate its direction of polarization alternately between two different directions.

4. Arrangement according to any of the preceding claims, **characterized** in that the detecting element comprises functions for communication.

## Patentansprüche

1. Anordnung zum Identifizieren einer optischen Faser aus einem Satz von Fasern an einer beliebigen Stelle entlang der Länge der Faser, die aufweist
ein Licht erzeugendes Element, das Licht bekannter Polarisation in ein erstes Ende der Faser einführt, welches Licht durch das andere Ende der Faser zurück zum ersten Ende reflektiert wird;
ein Suchelement, das an einer beliebigen Stelle entlang der Faser angeordnet ist, um die Polarisation des Lichtes durch mechanisches Drücken der Faser zu beeinflussen;
ein Detektionselement, das am ersten Ende der Faser angeordnet ist, um eine Polarisationsänderung zu detektieren, die durch das Suchelement bewirkt wird, und um dadurch die Identität der Faser zu prüfen oder nachzuweisen, dadurch gekennzeichnet, daß das Suchelement eine Druckeinrichtung (20) mit einer abgerundeten Oberfläche aufweist, die gegen ein Bandfaserkabel (10) anliegt und imstande ist, von einer Seite zu anderen zu schwingen, während sie gleichzeitig gegen das Kabel (10) drückt, so daß der Druck gegen eine einzelne Faser (A, B, C, D) dadurch moduliert wird, daß die Druckeinrichtung (20) ihre Stellung ändert.

2. Anordnung nach Anspruch 1, dadurch gekennzeichnet, daß das Suchelement so angeordnet ist, daß es den Druck auf die Faser sinusförmig moduliert.

3. Anordnung nach Anspruch 2, dadurch gekennzeichnet, daß das Licht erzeugende Element so ausgebildet ist, daß es seine Polarisationsrichtung abwechselnd zwischen zwei unterschiedlichen Richtungen dreht.

4. Anordnung nach einem der vorangehenden Ansprüche, dadurch gekennzeichnet, daß das Detektionselement Funktionen für Datenübertragung aufweist.

## Revendications

1. Dispositif pour identifier une fibre optique parmi un ensemble de fibres, à un endroit arbitraire sur la longueur de la fibre, comprenant :
un élément de génération de lumière qui injecte une lumière de polarisation connue dans une première extrémité de la fibre, cette lumière étant réfléchie par l'autre extrémité de la fibre en retour vers la première extrémité ;
un élément de recherche placé à un point arbitraire le long de la fibre afin d'influencer la polarisation de la lumière par pression mécanique sur la fibre ;
un élément de détection placé à la première extrémité de la fibre afin de détecter un changement de polarisation qui est provoqué par l'élément de recherche, et de vérifier ainsi l'identité de la fibre ;
caractérisé en ce que l'élément de recherche comprend un dispositif de pression (20) ayant une surface arrondie qui repose contre un câble de fibres de type ruban (10) et qui peut osciller d'un côté à l'autre en même temps qu'il exerce une pression contre le câble (10) de sorte que la pression contre une fibre individuelle (A,B,C,D) est modulée par le changement de position du dispositif de pression (20).

2. Dispositif suivant la revendication 1, caractérisé en ce que l'élément de recherche est prévu pour moduler sinusoïdalement la pression sur la fibre.

3. Dispositif suivant la revendication 2, caractérisé en ce que l'élément de génération de lumière est prévu pour une rotation de sa direction de polarisation alternativement entre deux directions différentes.

4. Dispositif suivant une quelconque des revendications précédentes, caractérisé en ce que l'élément de détection comprend des fonctions de communication.
